# FASCICULE DE BREVET EUROPEEN

(11) **EP 0 404 777 B1**
(45) Date de publication et mention de la délivrance du brevet: **14.08.1996**
(21) Numéro de dépôt: 89901468.2
(22) Date de dépôt: 11.01.1989
(51) Int. Cl.: B29C 65/08

(54) **SONOTRODE ULTRA SONIQUE COMPOSEE PARTICULIEREMENT ADAPTEE AU SOUDAGE ENTRE POLYSTYRENE SEMI-RIGIDE ET CELLULOSE MOULEE**
ZUSAMMENGESETZTE ULTRASCHALLSONOTRODE, SPEZIELL ANGEPASST ZUM SCHWEISSEN VON HALBSTARREM POLYSTYROL UND GEFORMTER ZELLULOSE
COMPLEX ULTRASONIC SONOTRODE PARTICULARLY ADAPTED FOR WELDING BETWEEN SEMI-RIGID POLYSTYRENE AND MOULDED CELLULOSE

(43) Date de publication de la demande: 02.01.1991
(73) Titulaire: CADIOU, James, F-76000 Rouen (FR)
(72) Inventeur: CADIOU, James, F-76000 Rouen (FR)
(74) Mandataire: Ballot, Paul Denis Jacques
(86) Numéro de dépôt international: FR8900005
(87) Numéro de publication internationale: WO9008028

(56) Documents cités:
- EP-A- 242 480
- DD-A- 235 046
- US-A- 3 577 292
- US-A- 3 948 705
- Derwent's abstract no 86-041350/60, SU-A-1 168 430 (MOISEEV) 23 juillet 1985
- Th. Herrmann "Gestalten der Schweissnaht beim Ultraschallschweissen", "Kunststoffe 77" no 7 1987, voir page 677, paragraphe 4.11 et figures 13,15
- "Patent Abstracts of Japan" abrégé du JP 58-1521 (DAIWA SEIKAN K.K. 6 janvier 1983
- "Patent Abstracts of Japan" abrégé du JP 60-201928 (YOSHINO KOGYOSHO K.K.) 12 octobre 1985

## Description

La présente invention est relative à la fermeture des plateaux en cellulose de 20, 24 et 30 oeufs présentés sous coiffe transparente en polystyrène.

Dans le domaine de l'oeuf, les plateaux de 20, 24 et 30 oeufs présentés sous coiffe transparente sont enveloppés d'un film rétractable.

Afin d'éviter l'usage du film et d'innover dans la présentation du produit, nous avons choisi de solidariser coiffe et plateau par soudage ultra-sonique. La nature particulière des matériaux à souder a nécessité la mise au point d'une sonotrode équipée d'empreintes spécifiques, objet du présent dépôt.

On connaît, du document Th. Herrmann "Gestalten der Schweißnaht beim Ultraschall schweißen", "Kunstsoffe 77", 1987, n°7, pages 673 à 679, des sonotrodes pour le soudage de deux revêtements synthétiques présents, pour chacun d'eux, à la surface d'une feuille de carton. Par ailleurs, on connaît, du document DD-A1-235046, un procédé de soudage de feuilles de matière plastique avec des cartonnages par ultrasons, on utilisant des sonotrodes dont l'empreinte présente des pyramides.

Aussi, au regard de l'état de la technique exposée, la présente invention concerne la soudure par ultra-sons et concerne des perfectionnements apportés aux sonotrodes dites composées afin de réaliser le soudage ultra-sonique entre polystyrène semi-rigide et cellulose moulée, et elle a pour objet un procédé de réalisation de plateaux à oeufs à coiffe transparente caractérisé en ce qu'il consiste à souder par ultrasons une feuille transparente de polystyrène semi-rigide sur un conteneur a alvéoles pour oeufs, en cellulose moulée, on utilisant une sonotrode d'empreinte à forme générale circulaire ou rectangulaire ayant une structure dc pyramides à base carrée, éventuellement tronquées, dont les faces forment entre elles un angle de 90 degrés.

Les matériaux à souder sont :
1) polystyrène transparent semi-rigide d'une épaisseur de 0,31 mm à 0,36mm
2) cellulose moulée fabriquée à partir de papier recyclé d'une épaisseur de 1,0 à 1,4 mm.

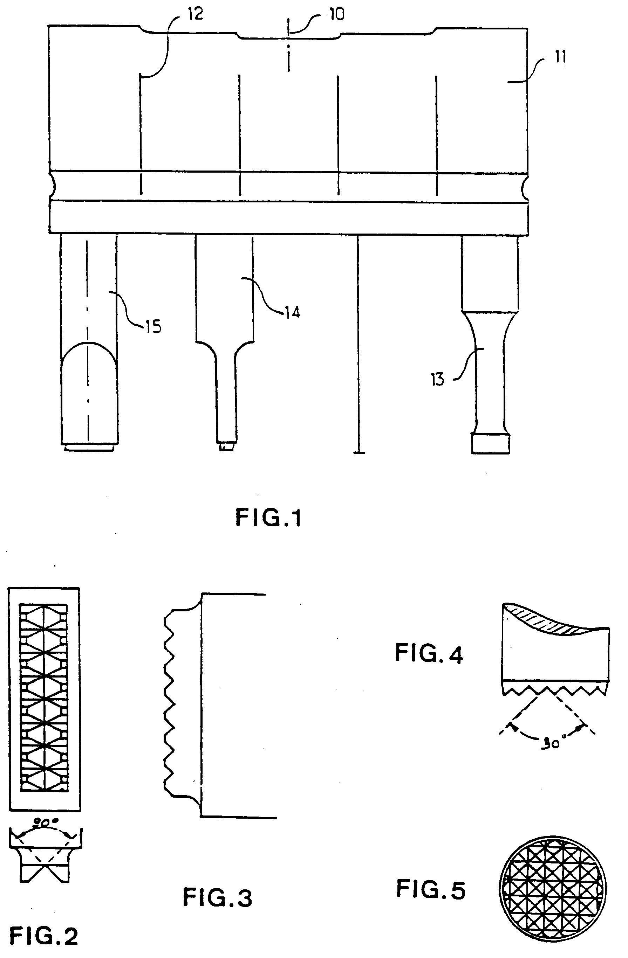

Les sonotrodes composées utilisées (fig. 1) comportent un bloc porteur (11) percé respectivement de 2 et 4 fentes (12) non débouchantes pour les sonotrodes à 3 et 4 têtes. La bloc porteur est équipé d'un filetage (10) pour la fixation sur le bloc vibrant.

Des sonotrodes simples (13, 14 et 15) fixées au bloc moteur concontrent l'énergie sur leur zone active terminale. Leur disposition sur le bloc porteur est fonction des points à réaliser.

Les empreintes planes en extrémité des sonotrodes ne permettent pas d'obtenir une soudure résistante à des tractions exercées dans toutes les directions. En effet, sur le matériau cellulose moulée composé de couches de cellulose, la résistance à la traction est maximum pour une traction tangentielle et minimum pour une traction perpendiculaire à la surface soudée.

Partant de cette constatation, nous avons défini une forme d'empreinte répondant aux objectifs suivants :
1) obtenir la meilleure résistance à la traction dans toutes les directions de l'espace,
2) modifier la surface de la cellulose sur le point de soudage,
3) permettre au polystyrène de pénétrer les fibres de cellulose,
4) augmenter la surface soudée par rapport à la surface du point d'origine.

Deux types de sonotrodes simples furent utilisées lors de nos essais : les sonotrodes à empreinte circulaire (13) et les sonotrodes à empreintes rectangulaires et circulaires.

L'empreinte rectangulaire est composée de 2 rangées de troncs de pyramides obliques à base carrés dont la face extérieure est perpendiculaire au plan de l'empreinte. L'empreinte est caractérisée par un angle de 90° entre les faces de deux pyramides contigües. La hauteur des troncs de pyramides obliques est variable et permet d'adapter la tenue du point de soudure à l'usage.

L'empreinte circulaire est composée d'un quadrillage de pyramides à base carrée dont l'angle caractéristique entre les faces des deux pyramides contigües est de 90°. Comme dans le cas précédent, les pyramides peuvent être tronquées afin d'adapter la résistance de la soudure à l'usage.

## Revendications

1. Procédé de réalisation de plateaux à oeufs à coiffe transparente caractérisé en ce qu'il consiste à souder par ultra-sons une feuille transparente de polystyrène semi-rigide sur un conteneur à alvéoles pour oeufs, en cellulose moulée, en utilisant une sonotrode d'empreinte à forme générale circulaire ou rectangulaire ayant une structure de pyramides à base carrée, éventuellement tronquées, dont les faces forment entre elles un angle de 90 degrés.

## Claims

1. Method for producing egg trays with a transparent cover characterised in that it consists of the ultrasonic welding of a sheet of transparent semi-rigid polystyrene onto a honeycombed container for eggs, made of moulded cellulose, using a cavity-forming sonotrode of a generally circular or rectangular shape being of a square-based pyramid structure, possibly truncated, the sides of which form an angle of 90 degrees to each other.

## Patentansprüche

1. Verfahren zur Herstellung von Trägern mit durchsichtiger Haube für Eier, **dadurch gekennzeichnet**, daß mittels Ultraschallschweißung eine transparente Folie aus halbstarrem Polystyrol auf einen Behälter aus geformter Zellulose mit Aufnahmenäpfen für die Eier aufgebracht wird, wobei eine Sonotrode mit einer im allgemeinen kreisförmigen oder rechteckigen Form und einer geprägten Stempelfläche verwendet wird, die eine Struktur mit Pyramiden mit quadratischer Basis, gegebenenfalls abgestumpft, aufweist, deren Außenflächen untereinander einen Winkel von 90° bilden.
